# EUROPÄISCHE PATENTSCHRIFT

(11) **EP 0 809 033 B1**
(45) Veröffentlichungstag und Bekanntmachung des Hinweises auf die Patenterteilung: **07.05.2003**
(21) Anmeldenummer: 97105232.9
(22) Anmeldetag: 27.03.1997
(51) Int. Cl.: F15B 21/04, B60T 11/30, F16K 24/04

(54) **Druckmittelzylinder mit einem Entlüftungselement mit axialer Elastromerdichtung**
Pressure fluid cylinder having a ventilating element with axial elastomeric joint
Cylindre à pression avec élément de ventilation ayant ensemble axial d'étanchéité en élastomère

(30) Priorität: 20.05.1996 DE 19620188; 25.11.1996 DE 19648683
(43) Veröffentlichungstag der Anmeldung: 26.11.1997
(73) Patentinhaber: ZF Sachs AG, 97424 Schweinfurt (DE)
(72) Erfinder: Riess, Thomas, Dipl.-Ing. (FH), 96179 Mürsbach (DE); Pagels, Olaf, 97493 Bergrheinfeld (DE); Tulaczko, Boleslaw, Dipl.-Ing., 97464 Niederwerrn (DE); Grosspietsch, Wolfgang, Dipl.-Ing. (FH), 97422 Schweinfurt (DE)

(56) Entgegenhaltungen:
- EP-A- 0 647 810
- DE-A- 1 425 731
- DE-A- 1 630 873
- DE-A- 1 956 296
- US-A- 2 672 999
- US-A- 2 941 541
- US-A- 3 487 896
- US-A- 3 561 475
- US-A- 4 552 283
- US-A- 5 154 452
- PATENT ABSTRACTS OF JAPAN vol. 005, no. 101 (M-076), 30. Juni 1981 & JP 56 046172 A (KUBOTA LTD), 27. April 1981

## Beschreibung

Die Erfindung betrifft einen Druckmittelzylinder, insbesondere einen hydraulischen Nehmer- oder Geberzylinder in Kraftfahrzeugen, gemäss dem Oberbegriff des Anspruchs 1. Solch ein Druckmittelzylinder ist aus der DE 14 25 731 bekannt.

Bei Geber- oder Nehmerzylindem an Kraftfahrzeugen ist es bekannt (z.B. US-PS 3,561,475), den Druckraum durch ein schraubenförmiges Entlüftungselement abzudichten, dass in eine Gewindebohrung des Zylindergehäuses eingedreht wird. Derartige Entlüftungselemente weisen üblicherweise konisch Dichtflächen auf, die durch Einleiten einer Axialkraft in Anlage an zugeordnete Dichtsitze gebracht werden.

Sofern diese Dichtsitze aus Kunststoff gefertigt sind, weisen sie hauptsächlich bei erhöhter Temperatur keine ausreichende Druckfestigkeit gegenüber den Entlüftungselementen mehr auf. Als Folge beginnt der Kunststoff an der entsprechenden Stelle zu kriechen und die Verbindung wird undicht. Um hier Abhilfe zu schaffen, wird häufig in Kunststoffgehäusen der Zylinder ein Metalleinsatz aufgenommen, der als Dichtsitz für das Entlüftungselement wirksam ist. Allerdings besteht hierbei die Gefahr einer Undichtigkeit zwischen Kunststoffgehäuse und Metalleinsatz aufgrund von Alterung und unterschiedlichem Verformungsverhalten der beiden Werkstoffe unter Temperatureinfluss.

Der konische Dichtsitz hat den Vorteil, dass zum Öffnen des Entlüftungselements nur wenige Umdrehungen notwendig sind, so dass die Entlüftung sehr einfach möglich ist.

Um die Probleme, die mit konischen Dichtsitzen verbunden sind, zu vermeiden, wird in der nicht vorveröffentlichten deutschen Patentanmeldung 195 16 389.3 vorgeschlagen, einen Radialdichtring zu verwenden. Gegenüber dem konischen Dichtsitz muss dabei aber in Kauf genommen werden, dass eine höhere Anzahl von Umdrehungen des Entlüftungselements gegenüber dem Gehäuse notwendig sind, um es zu öffnen.

Des weiteren sind permanent wirkende Entlüftungskanäle bekannt (DE-OS 1 425 731), bei denen eine Dichtscheibe mit einem Kanal versehen ist, so dass ständig eine Verbindung vom Druckzylinderraum zu einem Reservoir geöffnet ist.

Einen konischen Dichtsitz, wie er für Kunststoffgehäuse nicht geeignet ist, lässt sich aus der DE-OS 1 956 296 entnehmen.

Von dieser Problemstellung ausgehend soll ein Druckmittelzylinder mit einem Entlüftungselement so verbessert werden, dass er auch bei Kunststoffgehäusen eine problemlose und bleibende Dichtbarkeit bei gegenüber einer konischen Abdichtung vergleichbarem Entlüftungskomfort, bietet.

Zur Problemlösung wird ein Druckmittelzylinder gemäss dem Anspruch 1 vorgeschlagen.

Durch diese Ausbildung ist auch bei erhöhter Temperatur kein Kriechen der Dichtung zu erwarten. Schon geringe Umdrehungen reichen aus, um die Axialdichtung von ihrem Sitz zu lösen und das Entlüftungselement zu öffnen.

Vorteilhaft ist es, dass das Dichtelement ringförmig ausgebildet ist. Das Dichtelement ist als ein in einer Nut im Entlüftungselement sitzender O-Ring ausgebildet. Die ringförmige Ausgestaltung bietet den Vorteil, dass der Innendruck im Druckmittelzylinder der Dichtheit nicht entgegenwirkt, sondern da er radial innen auf das Dichtelement einwirken kann, die Dichtheit unterstützt, indem die Vorspannkraft des Dichtelements auf die Dichtfläche erhöht wird. Ein Ansteigen des Innendruckes bewirkt zudem ein weiteres Aufwelten des ringförmigen Dichtelements, so dass es radial gegen die Bohrung im Gehäuse anläuft.

Vorteilhaft ist es, wenn das Entlüftungselement an seinem gehäuseseitigen Ende in einen Zapfen übergeht, der zentrierend in eine Verjüngung der Bohrung eingreift. Dadurch ist eine gute Führung des Entlüftungselements beim Einschrauben in das Gehäuse gewährleistet. Außerdem bietet der Zapfen eine Sicherheit gegen Verlieren des Dichtelements und den Vorteil, dass vormontierte Einheiten zur Verfügung gestellt werden können.

Wenn die Bohrung in Höhe des Dichtelements radial mit einem gewendelten Entlüftungskanal versehen ist, dessen Auslauf auf dem Absatz endet, ist dafür Sorge getragen, dass ein sicheres Entlüften auch dann möglich ist, wenn der Druckmittelzylinder unter Innendruck steht, wie es beispielsweise dann vorkommt, wenn das Entlüften durch zwei Personen geschieht, und die eine beispielsweise das Kupplungspedal tritt, während die andere Bedienperson die Entlüftungsschraube herausdreht. Sofern der Innendruck dann das Dichtelement verformen würde, kann er durch den Entlüftungskanal abgebaut werden.

Dieselbe Wirkung ist erzielbar, wenn die Bohrung in Höhe des Dichtelements wenigstens eine axial verlaufende Nut aufweist, die über die Höhe des Dichtelements hinausragt. Vorzugsweise wird jedoch eine Mehrzahl von über den Umfang verteilt angeordnet Nuten in der Bohrung vorzusehen sein.

Zur Begrenzung der Einschraubtiefe des Entlüftungselements und damit Sicherung der Axialdichtung gegen Überbeanspruchung ist es vorteilhaft, wenn am Entlüftungselement ein radial vorstehender Bund vorgesehen ist, der außen an das Gehäuse des Druckmittelzylinders anschlägt Eine Variante hierzu kann gebildet werden durch einen hinter dem Innen-Gewinde in der Bohrung (am Gewindeauslauf) vorgesehenen radial nach innen ragenden Absatz, gegen den das Entlüftungselement mit einer Fläche (Verbreiterung) anschlägt.

Insbesondere vorteilhaft ist es, wenn zur Abdichtung gegen Leckflüssigkeit zwischen dem Dichtelement und dem Gewinde des Entlüftungselements eine Radialdichtung vorgesehen ist.

Eine weitere vorteilhafte Abdichtung gegen Leckflüssigkeit ist möglich, wenn über die Länge des Außen-Gewindes des Entlüftungselements zwei diametral über die Gewindehöhe nach radial außen hervorstehende Rippen vorgesehen sind. Diese Rippen sind an das aus Kunststoff bestehende Entlüftungselement dadurch anbringbar, dass die Trennfuge des Werkzeugs ein wenig aufgeweitet wird, so dass sich beim Druckspritzen dort Material anlagert. Beim Eindrehen des Entlüftungselements in das Gewinde werden die Rippen dann so verquetscht, dass das Gewinde abgedichtet wird. Dabei muss natürlich in Kauf genommen werden, dass das Eindrehen zunächst etwas schwerer erfolgt.

Insbesondere vorteilhaft ist es, wenn die Rippen in Axialrichtung über einen vollständigen Gewindegang hinausragen.

Mit Hilfe einer Zeichnung sollen Ausführungsbeispiele der Erfindung nachfolgend näher erläutert werden. Es zeigt:
- Figur 1: ein erstes Ausführungsbeispiel eines in einen Druckmittelzylinder eingeschraubten Entlüftungselements im geschlossenen Zustand;
- Figur 2: den Druckmittelzylinder nach Figur 1 mit geöffnetem Entlüftungselement;
- Figur 3: eine Variante des Ausführungsbeispieles nach Figur 1;
- Figur 4: ein Beispiel eines in einen Druckmittelzylinder eingeschraubten Entlüftungselements, das nicht zu der Erfindung gehört.
- Figur 5: den Schnitt durch den Druckmittelzylinder in Höhe der Entlüftungsbohrung;
- Figur 6: den Schnitt gemäß Figur 5 bei einem weiteren Ausführungsbeispiel eines Druckmittelzylinders.

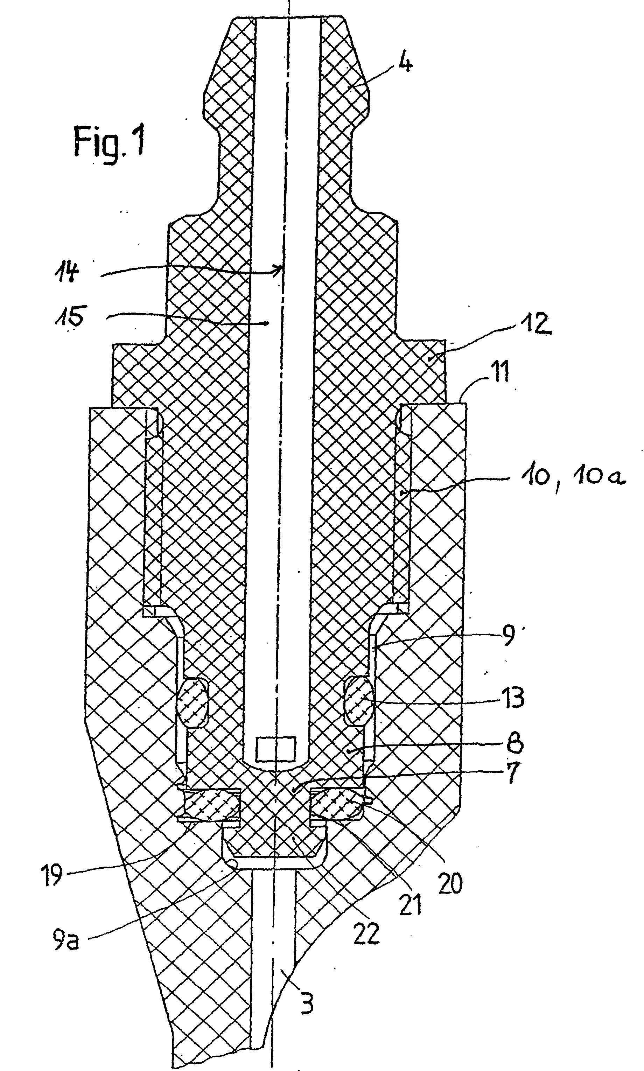

Figur 1 zeigt einen Druckmittelzylinder im Teillängsschnitt, in den ein Entlüftungselement 4 eingeschraubt ist. Im Druckmittelzylinder, der beispielsweise ein Geber- oder Nehmerzylinder einer hydraulisch betätigten Kupplung in einem Kraftfahrzeug sein kann, ist ein Druckraum vorgesehen, in dem ein hier nicht näher dargestellter Kolben axial verschiebbar angeordnet ist, über den der Druck aufgebaut werden kann. Der Druckraum ist über die Zugangsbohrung 3 mit dem Sitz des Entlüftungselements 4 verbunden.

Das Entlüftungselement 4 ist in eine im Gehäuse vorgesehene Stufenbohrung 9 über ein Gewinde 10, 10a eingeschraubt. An dem den Druckraum zugewandten Seite ist der Schaft 8 des Entlüftungselements 4 mit einem Zapfen 7 versehen. Zur Begrenzung der Einschraubtiefe des Entlüftungselements 4 ist dieses mit einem radial nach außen vorstehenden Absatz 12 versehen, der an der mit 11 bezeichneten Stelle von außen gegen das Gehäuse 1 anschlägt. Zur Vermeidung von Leckageverlusten ist zwischen dem Außen-Gewinde 10 und der Dichtung 20 eine Radialdichtung 13 vorgesehen, die in einer ebenfalls nicht näher bezeichneten Umfangsnut im Schaft 8 sitzt. Diese Radialdichtung 13 ist vorzugsweise ein O-Ring.

Fluchtend mit der Mittelachse 14 ist das Entlüftungselement 4 mit dem Entlüftungskanal 15 versehen. Dieser Entlüftungskanal 15 ist so lange verschlossen, wie die Dichtung 20 dichtet. Wird das Entlüftungselement aus der Bohrung 9 herausgedreht, wird die Dichtwirkung der Dichtung 20 aufgehoben und die Verbindung zwischen der Zugangsbohrung 3 und dem Entlüftungskanal 15 hergestellt. Die Radialdichtung 13 verhindert in diesem Fall, dass Druckmittel durch das Gewinde 10, 10a entweicht. Der Entlüftungskanal 15 kann - wie hier nicht dargestellt - einen polygonalen Querschnitt aufweisen und beispielsweise vier- oder sechseckig sein, so dass er für das Eingreifen eines zugeordneten Schlüssels geeignet ist und auf diese Weise das Entlüftungselement 4 aus dem Gehäuse 1 herausgedreht werden kann.

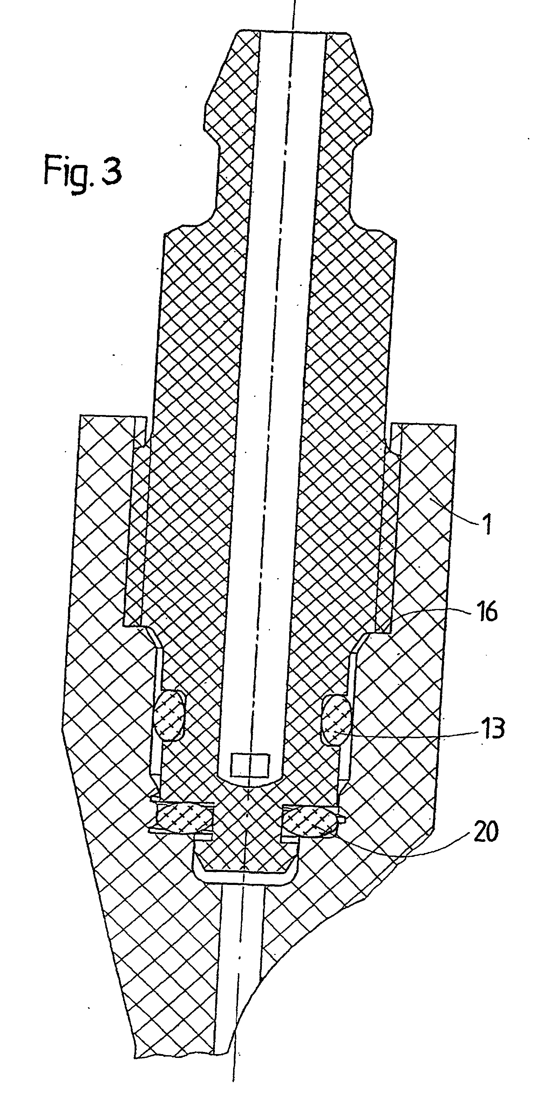

Die Figur 3 zeigt ein weiteres Ausführungsbeispiel eines Druckmittelzylinders, bei dem die axiale Abdichtung durch einen 0-Ring 20 erfolgt, der im Bereich des stirnseitigen Endes des Entlüftungselements 4 angeordnet ist.

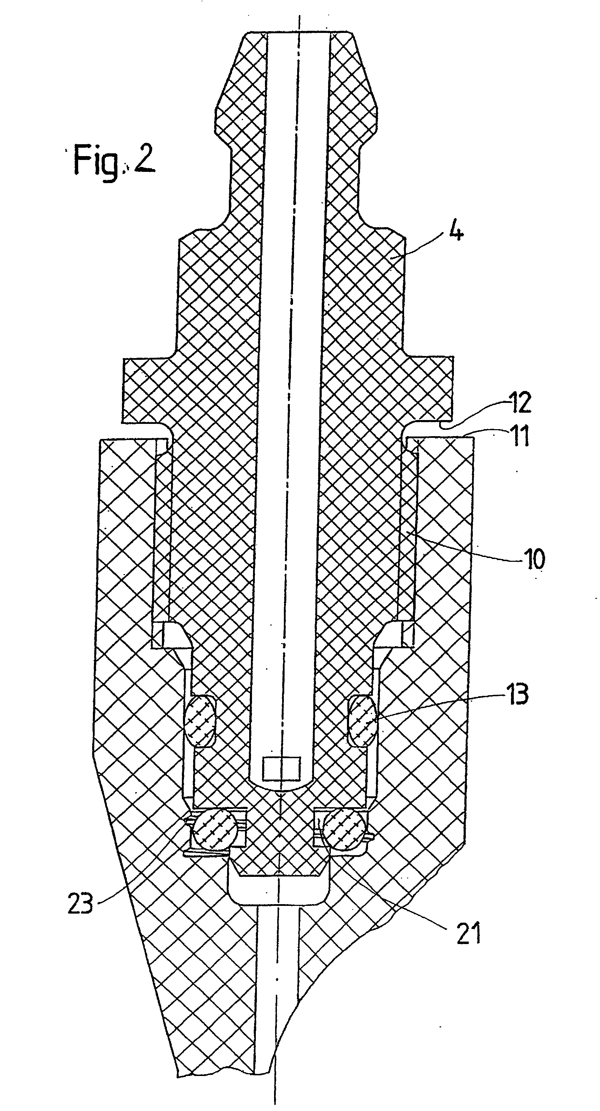

Wie aus Figuren 1 und 2 ersichtlich ist, liegt der 0-Ring 20 in einer Nut 21 im Entlüftungselement 4. Am gehäuseseitigen axialen Ende der Nut 21 geht das Entlüftungselement 4 in einen Zapfen 22 über, dessen Außendurchmesser geringer ist, als der Außendurchmesser auf der anderen Seite der Nut 21. Dieser Zapfen 22 zentriert das Entlüftungselement 4 in einer Verjüngung 9a der Stufenbohrung 9.

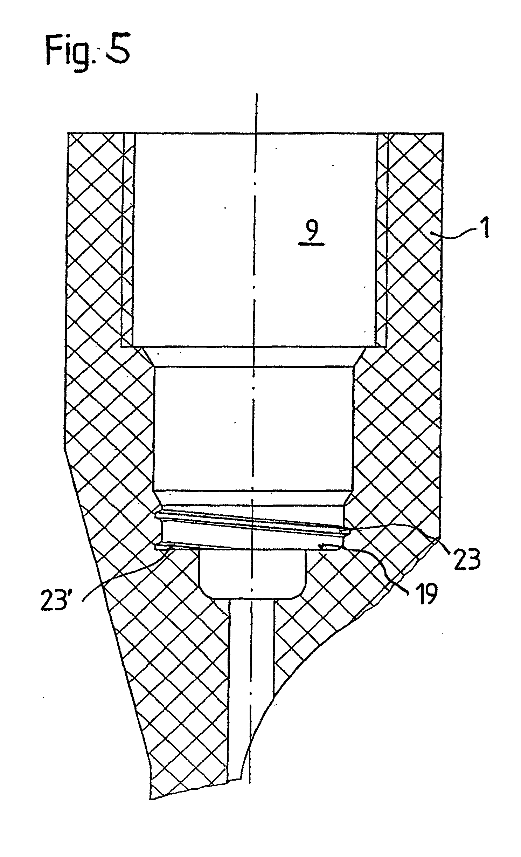

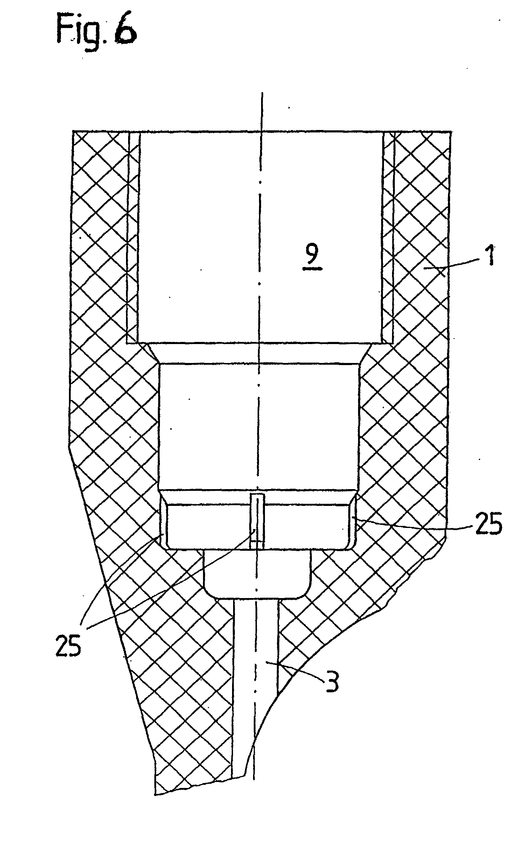

Über die Zugangsbohrung 3 auf den 0-Ring 20 einwirkender Innendruck führt zu einer weiteren Verformung des O-Rings 20 und wirkt somit die axiale Dichtwirkung unterstützend. Damit eine sichere Entlüftung auch dann möglich ist, wenn der Druckmittelzylinder unter Innendruck steht, ist - wie Figuren 5 und 6 zeigen - in der Bohrung 9 im Bereich des Sitzes des O-Rings 20 ein bzw. mehrere Entlüftungskanäle 23, 25 vorgesehen.

Der in Figur 5 dargestellte Entlüftungskanal 23 ist gewendelt und sein Auslauf 23' endet auf dem Absatz 19. Ein kurzes Anheben des 0-Ringes 20 von seinem Dichtsitz auf dem Absatz 19 bewirkt, dass die Entlüftung über den Entlüftungskanal 23 möglich ist, auch wenn der 0-Ring 20 durch den Innendruck belastet wird.

Aus Figur 6 ist ersichtlich, dass auch eine oder mehrere über den Umfang der Bohrung 9 verteilt angeordnete Nuten 25 als Entlüftungskanäle vorgesehen sein können.

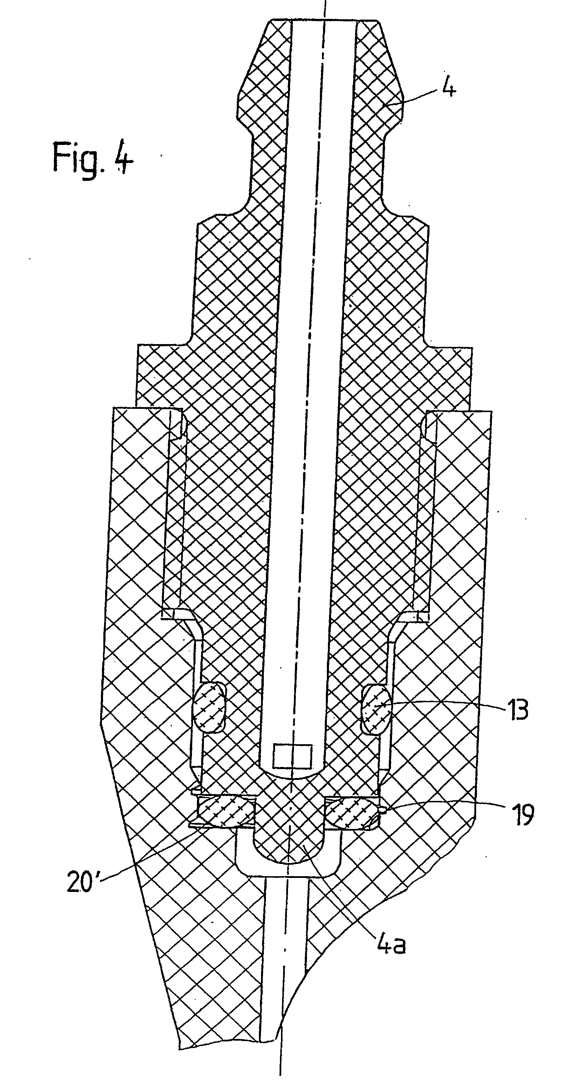

Bei dem in Figur 4 dargestellten Beispiel, das nicht zu der Erfindung gehört ist der O-Ring 20' lose mit dem Entlüftungselement 4 verbunden. Mit seinem Innendurchmesser umgreift er eine entsprechend ausgebildete Verjüngung 4a am stimseitigen Ende des Dichtelements 4. Im übrigen ist die Funktionsweise identisch zu dem zuvor erläuterten Ausführungsbeispiel. Der lose aufgesetzte 0-Ring 20' bietet den Vorteil, dass die Herstellkosten für das Entlüftungselement 4 gegenüber der genuteten Ausbildung günstiger sind. Nachteilig könnte jedoch bei besonderen Einsatzbedingungen sein, dass beim Austauschen des Entlüftungselements 4 nicht unbedingt sichergestellt ist, dass der 0-Ring 20' aus dem Druckmittelzylinder 1 entfernt wird und nicht versehentlich auf dem Absatz 19 liegen bleibt.

Im übrigen sind in den einzelnen Figuren identische oder funktionsgleiche Bauteile mit denselben Bezugsziffern bezeichnet.

## Patentansprüche

1. Druckmittelzylinder, insbesondere hydraulischer Nehmer- oder Geberzylinder in Kraftfahrzeugen, mit einem in eine Bohrung (9) des Zylinder-Gehäuses (1) einschraubbaren Entlüftungselement (4), das gegenüber dem Gehäuse (1) abgedichtet ist, wobei das Entlüftungselement (4) im Bereich seines gehäuseseitigen Endes mit einem runden Dichtelement (20) in Wirkverbindung steht, welches axial gegen einen in der Bohrung (9) vorgesehenen Absatz (19) gepreßt wird,
**dadurch gekennzeichnet,**
**dass** das Dichtelement (20) als O-Ring (20) in einer Nut (21) angeordnet ist.

2. Druckmittelzylinder nach Anspruch 1,
**dadurch gekennzeichnet,**
**dass** das Entlüftungselement (4) an seinem gehäuseseitigen Ende in einen Zapfen (22) übergeht, der zentrierend in eine Verjüngung (9a) der Bohrung eingreift.

3. Druckmittelzylinder nach einem oder mehreren der vorstehenden Ansprüche,
**dadurch gekennzeichnet,**
**dass** die Bohrung (9) in Höhe des Dichtelements (20) radial mit einem gewendelten Entlüftungskanal (23) versehen ist, dessen Auslauf (23') auf dem Absatz (19) endet.

4. Druckmittelzylinder nach einem oder mehreren der vorstehenden Ansprüche,
**dadurch gekennzeichnet,**
**dass** die Bohrung (9) in Höhe des Dichtelements (20) wenigstens eine axial verlaufende Nut (25) aufweist.

5. Druckmittelzylinder nach Anspruch 4,
**dadurch gekennzeichnet,**
**dass** eine Mehrzahl von über den Umfang verteilt angeordneter Nuten (25) vorgesehen ist.

6. Druckmittelzylinder nach einem oder mehreren der vorstehenden Ansprüche,
**dadurch gekennzeichnet,**
**dass** die Einschraubtiefe des Entlüftungselements (4) begrenzt wird durch einen radial vorstehenden Bund (12), der außen an das Gehäuse (1) anschlägt.

7. Druckmittelzylinder nach einem oder mehreren der vorstehenden Ansprüche,
**dadurch gekennzeichnet,**
**dass** die Einschraubtiefe des Entlüftungselements (4) begrenzt wird durch einen hinter dem Gewinde (10a) vorgesehenen radial nach innen ragenden Absatz in der Bohrung (9), gegen den das Entlüftungselement (4) mit einer Fläche (16) anschlägt.

8. Druckmittelzylinder nach Anspruch 1,
**dadurch gekennzeichnet,**
**dass** zur Abdichtung gegen Leckflüssigkeit zwischen dem Dichtelement (20) und dem Gewinde (10) des Entlüftungselements (4) eine Radialdichtung (13) vorgesehen ist.

## Claims

1. Pressure-medium cylinder, in particular hydraulic slave or master cylinder in motor vehicles, having a venting element (4) which is capable of being screwed into a bore (9) of the cylinder housing (1) and is sealed off relative to the housing (1), the venting element (4) being operatively connected, in the region of its housing-side end, to a round sealing element (20) which is pressed axially against a shoulder (19) provided in the bore (9), **characterized in that** the sealing element (20) is arranged as an O-ring (20) in a groove (21).

2. Pressure-medium cylinder according to Claim 1, **characterized in that** the venting element (4) merges, at its housing-side end, into a tenon (22) which engages in a centring manner into a narrowing (9a) of the bore.

3. Pressure-medium cylinder according to one or more of the preceding claims, **characterized in that** the bore (9) is provided radially, level with the sealing element (20), with a coiled venting duct (23), the run-out (23') of which terminates on the shoulder (19).

4. Pressure-medium cylinder according to one or more of the preceding claims, **characterized in that** the bore (9) has, level with the sealing element (20), at least one axially running groove (25).

5. Pressure-medium cylinder according to Claim 4, **characterized in that** a plurality of grooves (25) arranged so as to be distributed over the circumference are provided.

6. Pressure-medium cylinder according to one or more of the preceding claims, **characterized in that** the screw-in depth of the venting element (4) is limited by a radially projecting collar (12) which butts on the outside against the housing (1).

7. Pressure-medium cylinder according to one or more of the preceding claims, **characterized in that** the screw-in depth of the venting element (4) is limited by a radially inward-projecting shoulder which is located in the bore (9) and is provided behind the thread (10a) and against which the venting element (4) butts with a face (16).

8. Pressure-medium cylinder according to Claim 1, **characterized in that**, for sealing off against leakage liquid, a radial seal (13) is provided between the sealing element (20) and the thread (10) of the venting element (4).

## Revendications

1. Cylindre à pression, en particulier cylindre hydraulique récepteur ou maître-cylindre dans des véhicules automobiles, avec un élément de ventilation (4) à visser dans un alésage (9) du corps de cylindre (1) et rendu étanche par rapport au corps de cylindre (1), dans lequel l'élément de ventilation (4) est en relation active, dans la région de son extrémité du côté du corps, avec un élément d'étanchéité rond (20) qui est pressé en direction axiale contre un épaulement (19) prévu dans l'alésage (9), **caractérisé en ce que** l'élément d'étanchéité (20) est disposé sous la forme d'un joint torique (20) dans une rainure (21).

2. Cylindre à pression suivant la revendication 1, **caractérisé en ce que** l'élément de ventilation (4) se transforme, à son extrémité du côté du corps, en un tourillon (22), qui s'engage en position de centrage dans une partie rétrécie (9a) de l'alésage.

3. Cylindre à pression suivant une ou plusieurs des revendications précédentes, **caractérisé en ce que** l'alésage (9) est pourvu radialement, à hauteur de l'élément d'étanchéité (20), d'un canal de ventilation hélicoïdal (23), dont la sortie (23') se termine sur l'épaulement (19).

4. Cylindre à pression suivant une ou plusieurs des revendications précédentes, **caractérisé en ce que** l'alésage (9) présente au moins une rainure orientée axialement (25) à hauteur de l'élément d'étanchéité (20).

5. Cylindre à pression suivant la revendication 4, **caractérisé en ce qu'**il est prévu une pluralité de rainures (25) réparties sur la périphérie.

6. Cylindre à pression suivant une ou plusieurs des revendications précédentes, **caractérisé en ce que** la profondeur de vissage de l'élément de ventilation (4) est limitée par un rebord (12) en saillie radiale, qui bute extérieurement sur le corps (1).

7. Cylindre à pression suivant une ou plusieurs des revendications précédentes, **caractérisé en ce que** la profondeur de vissage de l'élément de ventilation (4) est limitée par un épaulement prévu derrière le filet (10a) et sortant radialement vers l'intérieur dans l'alésage (9), contre lequel l'élément de ventilation (4) vient buter avec une face (16).

8. Cylindre à pression suivant la revendication 1, **caractérisé en ce qu'**il est prévu une garniture d'étanchéité radiale (13) entre l'élément d'étanchéité (20) et le filet (10) de l'élément de ventilation (4), en vue d'assurer l'étanchéité contre des fuites de liquide.
